# EUROPEAN PATENT SPECIFICATION

(11) **EP 1 447 312 B1**
(45) Date of publication and mention of the grant of the patent: **03.05.2006**
(21) Application number: 04075480.6
(22) Date of filing: 13.02.2004
(51) Int. Cl.: B62D 59/04

(54) **Manoeuvring device for non-driven vehicles**
Manövriervorrichtung für nicht angetriebene Fahrzeuge
Dispositif de manoeuvre pour véhicules non motorisés

(30) Priority: 13.02.2003 NL 1022672
(43) Date of publication of application: 18.08.2004
(73) Proprietor: Reich KG, 35713 Eschenburg-Wissenbach (DE)
(72) Inventor: Beijerbergen Van Henegouwen, Cornelis Martin, 5314 AP Bruchem (NL); Bender, Steffen, 35745 Herborn (DE)
(74) Representative: van Westenbrugge, Andries

(56) References cited:
- EP-A- 1 203 713
- EP-A- 1 225 090
- DE-A- 2 705 318
- US-A- 3 826 324

## Description

The subject invention relates to a manoeuvring device for non-driven vehicles according to the preamble of claim 1.

Such a device is known from US-3826324 A. A structure is disclosed, being operated with a central cable. By pulling this cable a rod extending perpendicular to the direction of drive of the vehicle, is rotated, and by this rotation the rollers are pulled against the tires of the vehicle, moved therefrom respectively.

Although such a device seems to be satisfactory, the drawback exists that a large force is necessary to press the rollers against the tires. Such manoeuvring devices are used for caravans and the like, which often have to be moved from a difficult position (somewhat lowered), wherein it has also been found that the wheels are wet so that engagement between roller and tire is less efficient. It has been found that with the simple cable device as proposed in the above US patent specification insufficient operating force can be exerted to press the supports with the rollers against the wheels.

Because of that the subject invention aims to provide a structure allowing on the one hand to exert larger forces and wherein on the other hand the structure should be realised relatively simply.

This aim is realised with a manoeuvring device as described above having the features of claim 1.

With the structure according to the subject invention the arm connected to the support will realise on the point of engagement with the operating means a movement substantially parallel to the axle of the vehicle. Such a movement is converted by the arm to a movement from the support to the wheel, from the wheel respectively. By this combination it is possible to introduce large forces. Generally this will be pressure forces, wherein the arms of opposite supports are pressed from each other. Because of that high forces can be exerted on each support.

There are different possibilities to displace the arms in the direction of the axle of the vehicle. According to a first preferred embodiment the operating means comprise a rotatable screw rod and the arms are provided near the extremities thereof with a nut structure. This nut structure engages the arm and by rotation of the screw rod displacement of the nuts is realised. The screw rod itself can be stationary relative to the chassis of the vehicle and will preferably extend substantially parallel to the wheel axis of the vehicle. According to a very simple embodiment a single screw rod for both rollers is provided, having at one end a left hand screw thread and on the other end a right hand screw thread. Further on one or both extremities of the screw rod an engagement head for an electrical drive such as a battery-drilling machine can be provided.

It is also possible to use a screw rod being driven by a motor. In such a case it is possible to start from two screw rod halves, wherein the motor is in the center between these halves. In such case the screw rods can have a different direction of rotation.

According to a further preferred embodiment the operating means comprise a rod with variable length. Such a variable length can be obtained with a hydraulic piston/cylinder unit. However, it has to be understood that there are other ways to change the length of a rod, such as with a screw-threaded structure and the like.

In all embodiments locking pins or other structures can be provided to fix the support either in the position of the support pressed against the wheel or in the position moved away from the wheel. In this way a non-desired movement can be prevented. The arm can be connected with an auxiliary arm pivotally provided thereon, supporting on the frame structure, the chassis of the vehicle respectively.

The invention also relates to a vehicle provided with a manoeuvring device, comprising two drivable rollers for driving of opposite wheels of a vehicle, wherein each roller is provided on a support, arranged on a frame structure, which is connected to the vehicle chassis said support being displaceable relative to the chassis of said vehicle and wherein between said support and the chassis operating means are provided to move both supports relative to said frame, in order to bring said wheels into engagement with, out of engagement from said vehicle, said operating means substantially extending rectangularly between said two supports, wherein each support is provided with an arm realised such that at displacement by said operating means in a direction substantially in the direction of extension of said operating means, the support is moved to and from the wheel.

The invention will be further disclosed referring to the embodiments as examples shown in the drawing. Therein shows:
Fig. 1 in perspective view a vehicle provided with a device of the invention;
Fig. 2 a detail of the structure having the roller pressed against the wheel;
Fig. 3 the detail according to fig. 2 having the roller removed from the wheel;
Fig. 4 a first embodiment of the device according to the invention in plan view;
Fig. 5 a second embodiment of the subject invention;
Fig. 6 a third embodiment of the subject invention.

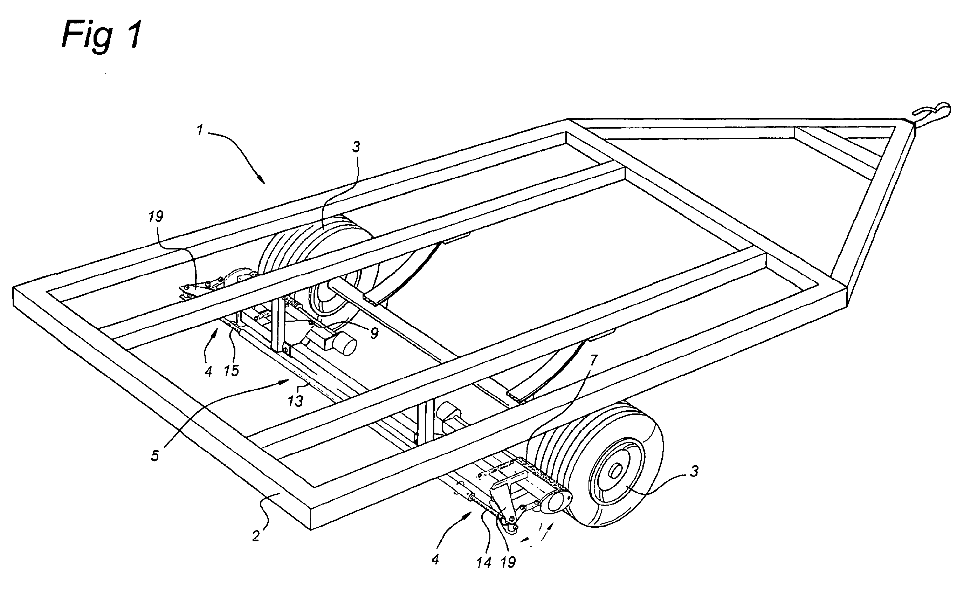

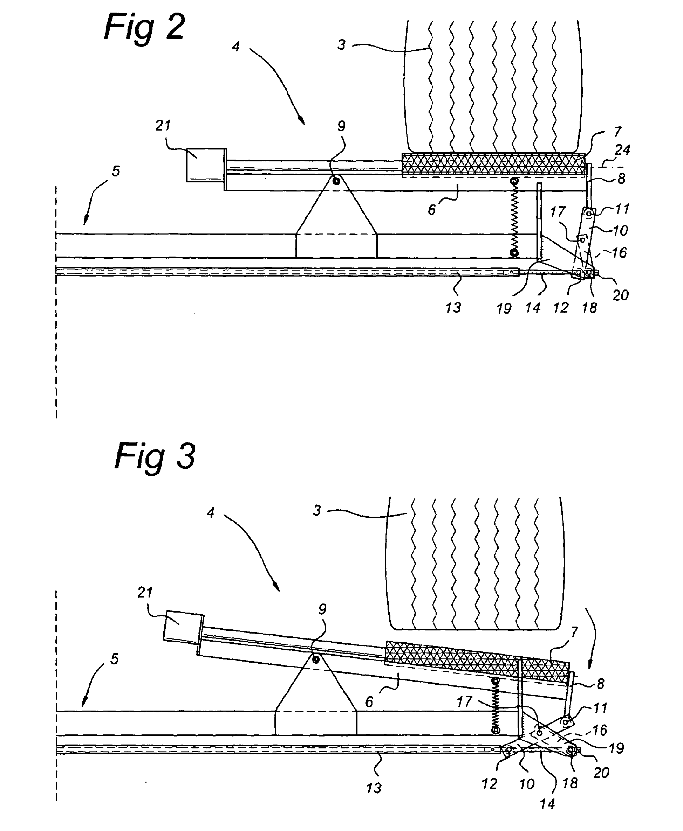

In fig. 1, 1 refers to a vehicle. Only the chassis 2 of this vehicle is shown. The upper structure can provide a loading platform, caravan or the like. The wheels have reference number 3. A manoeuvring device 4 engages both on the left hand and the right hand wheel 3. Details are clear from fig. 2 and 3. The manoeuvring device 4 comprises a frame structure, which is common for both manoeuvring devices 4 and has reference number 5. This is fixed in any way to the chassis 2 of the vehicle. It will be understood that if the manoeuvring device is provided by the producer of the vehicle, certain parts of the frame structure can be omitted or included in the chassis.

A support 6 is pivotally connected with the frame structure 5. The pivot point has reference 9. At the free extremity of the support 6 a roller 7 is provided rotatable around axis 24. This is driven by an electric motor 21. By pressing the roller 7 against the related wheel, by rotation of the motor and so the rotation of the roller the related vehicle can be manoeuvred. Displacement of the support 6 and in that way the roller 7 is effected with an end plate 8 mounted on the free extremity of the support. This plate can be removable for easy changing of the roller or can be permanently mounted to the support, so that the replacement of the roller is more complicated. Plate 8 is provided with a pivot 11 on which also a lever 10 engages. The other side of the lever 10 is provided with a nut-like portion 12, which can also articulate within pivot 10. Between pivots 11 and 12 a further pivot 17 is provided on which an arm engages, being pivotally connected to support 19, being part of the frame structure through pivot 18.

On both sides of the vehicle such a support 19 is provided. A screw rod extends there between, being provided at both extremities of a screw thread portion 14, 15 respectively. The screw thread 14, 15 has a different hand. Screwrod 13 is substantially parallel to axis 24.

Screw rod 13 is provided at both extremities of screw head 20 (for example hexagonal). By rotation of the screw head 20 on both sides, the screw rod is rotated over the full length thereof. By its accommodation between supports 19 movement in longitudinal direction thereof is not possible.

At the rotation of the screw head 20, screw thread 14 will rotate as is shown in fig. 2 and 3. The screw thread 14 engages in nut 12. Because the thread 14 cannot be displaced the nut 12 will displace and in this way lever 10. At correct positioning of the arm 16 an optimum force transmission to the pivot point 11 can be obtained, such that the end plate 8 moves from the position shown in fig. 2, wherein the roller 7 pushes against the wheel, to the position shown in fig. 3.

Because the thread on the other side of the vehicle (not shown) has an opposite hand, at the rotation in the same direction, the same mechanism of movement will be realised. In this way it is possible from one side of the vehicle to move the support 6 to and from the wheels by operating of the screw head 20.

This operation can for example be effected by an accumulator-drilling machine having a suitable bit.

Locking devices (not shown) can be provided which lock in one of the end positions of the support shown in fig. 2 and 3, the support relative to the frame structure 5, such that no undesired displacement of the support during driving of the vehicle can occur.

In the structure shown above, near the point of contact between the roller 7 and the wheel 3, the lever 10 will be nearly vertical (fig. 2). In this position at a certain displacement of the nut 12a corresponding small displacement at the pivot 11 will be realised. I.e. during the displacement from the position shown in fig. 3 to the position shown in fig. 2, during the first part of the trajectory at one revolution of the screw head a relative large displacement of the end plate will occur at relatively small force. At the end, i.e. at reaching of the position shown in fig. 2, with the same rotation of the screw head a considerable smaller displacement to the wheel of the end part 8, roller 7 respectively will be realised but the induced force will be much higher. In this way it is possible with a relatively simple structure to obtain fast operation which allows for considerable pressing force.

The connection between the screw thread portions 13 and 14 is only realised for transmitting of rotation. At exerting pressure with the rollers 7 against the wheel there is a pulling force between the nut 12 and the pivot 18 as shown in fig. 2 and 3.

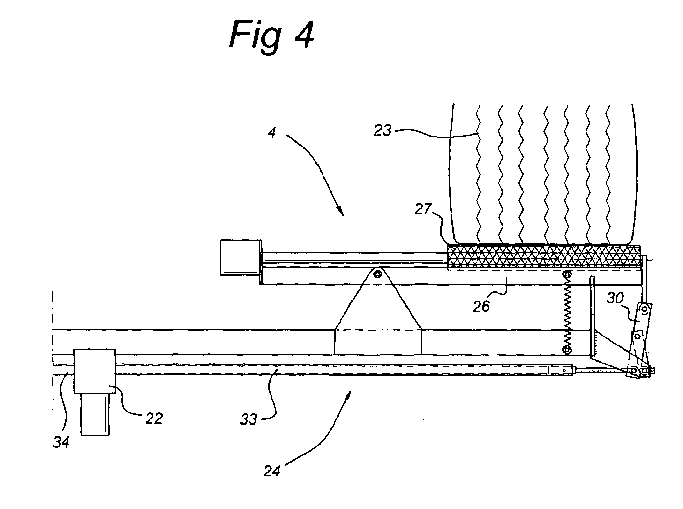

Different embodiments of the invention will immediately be clear for the person skilled in the art. Some examples are shown in fig. 4-6.

In fig. 4 the manoeuvring device is generally referred to by 24. The driven wheels are shown by 23. Supports 26 are present provided with rollers 27. These supports 26 are pivotable around pivots 29.

The supports 26 are each provided with a structure corresponding to fig. 1-3, this structure comprises a two-side rod portions 33 and 34. These rod portions are rotatably driven by a central electromotor. Rotation can be in the same direction. In that case screw threads 33 and 34 have opposite hand. Displacement in opposite direction is possible wherein the screw thread 33 and 34 can be identical. Screw thread portions 33 and 34 support two brackets 29 (only one shown) being part of the frame structure 25.

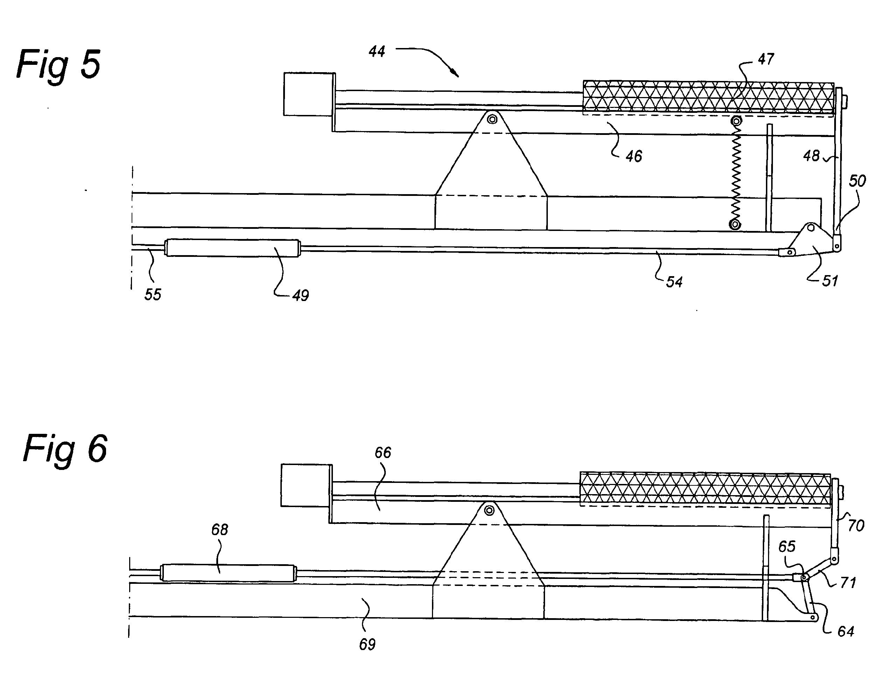

In fig. 5 a further embodiment is shown. The manoeuvring devices are referred to by 44. Support 46 is pivotally connected in the way shown in fig. 1 and provided with rollers 47. On the end plates 48 there is a lever 50. Through a pivoting tilting plate 51 movement of the lever 50 is converted to movement of the rod 54, 55 respectively. In the center is a ram 48, which can move the rods 54, 55 to each other, away from each other respectively. Each other mechanism to move the rods 54, 55 to each other, from each other respectively can be used.

A further embodiment having rods moving to each other is shown in fig. 6. The frame structure has reference number 69 and is provided with a supports 69. Arms 71 are pivotally connected thereto.

Levers 70 are mounted to end plate of support 66, which are pivotally connected in the way shown in fig. 1. Lever 70 is pivotally connected to arm 71. In the same pivot 65 there is a rod 64. The drive rollers can be moved to/from the wheels with an operating mechanism 68, such as (hydraulic, pneumatic, electric) ram.

As indicated above many further embodiments are possible without leaving the scope of protection of the subject invention and such further embodiments are immediately clear for the person skilled in the art and within the range of the appended claims.

## Claims

1. Manoeuvring device for non-driven vehicles, comprising a drivable roller for driving a vehicle wheel, a support (6), a frame (5) structure which is connected to the vehicle chassis (2) and operation means, said roller being provided on said support and having an axis (24), said support being displaceably arranged on said frame structure (5), wherein said operation means are provided between said support and said frame structure to displace the support relative to said frame structure, in order to engage and disengage said roller with said wheel of said vehicle, said operating means being elongate and extending substantially parallel to said axis (24), **characterised in that** said support is provided with an arm (10,30,50,70) to operate said support arranged such that at displacement of said arm by said operating means in a direction substantially in the direction of extension of said operating means, the support is moved to and from the wheel.

2. Device according to claim 1, wherein said operating means comprise a rotatable screw rod and said arm is provided with a nut engaging thereto.

3. Device according to claim 2, wherein said screw rod is provided at the extremities thereof with a screw thread with opposite hand.

4. Device according to one of the preceding claims wherein said frame structure is provided with a bracket for rotatably and linear indisplaceably receiving of said operating means.

5. Device according to claim 4, wherein said arm is provided with a pivot (17), to which an arm (16) is connected, being pivotally connected (18) with the frame structure on the other end.

6. Device according to one of the claims 2 and 3, comprising a drive motor (22) for said screw rod.

7. Device according to one of the preceding claims, wherein the operating means comprise a rod structure having variable length.

8. Device according to claim 7, comprising a ram.

9. Device according to one of the preceding claims wherein said frame structure comprising connection means for connection to the chassis of a vehicle.

10. Device acording to one of the preceding claims wherein a single operating means controls two opposed supports.

11. Vehicle provided with a manoeuvring device, comprising two drivable rollers for driving of opposite wheels of a vehicle, wherein each roller is provided on a support (6) arranged on a frame (5) structure, which is connected to the vehicle chassis (2), said support being displaceable relative to the chassis (2) of said vehicle and wherein between said support (6) and the chassis operating means are provided to move both supports (6) relative to said frame (5) in order to bring said wheels into engagement with, out of engagement from said vehicle, said operating means substantially extending rectangularly between said two supports, **characterised in that** each support is provided with an arm (10, 30, 50, 70) realised such that at displacement by said operating means in a direction substantially in the direction of extension of said operating means, the support is moved to and from the wheel.

## Patentansprüche

1. Manövriervorrichtung für nicht angetriebene Fahrzeuge, die eine antreibbare Rolle zum Antreiben eines Fahrzeugrads, einen Träger (6), eine Rahmenstruktur (5), die mit dem Fahrzeugchassis (2) verbindbar ist, und Betätigungsmittel umfasst, wobei die Rolle auf dem Träger bereitgestellt ist und eine Achse (24) aufweist, wobei der Träger auf der Rahmenstruktur (5) versetzbar angeordnet ist, wobei die Betätigungsmittel zum Versetzen des Trägers relativ zur Rahmenstruktur zwischen dem Träger und der Rahmenstruktur bereitgestellt sind, um die Rolle mit dem Rad des Fahrzeugs in Eingriff und außer Eingriff zu bringen, wobei die Betätigungsmittel länglich sind und sich im Wesentlichen parallel zur Achse (24) erstrecken,
**dadurch gekennzeichnet,**
**dass** der Träger mit einem Arm (10, 30, 50, 70) zum Betätigen des Trägers versehen ist, der derart angeordnet ist, dass der Träger beim Versetzen des Arms mittels der Betätigungsmittel in einer Richtung im wesentlichen in Richtung der Erstreckung der Betätigungsmittel zum und vom Rad weg bewegt wird.

2. Vorrichtung nach Anspruch 1, wobei die Betätigungsmittel eine drehbare Schraubenspindel umfassen und der Arm mit einer Mutter ausgestattet ist, die mit dieser in Eingriff ist.

3. Vorrichtung nach Anspruch 2, wobei die Schraubenspindel an ihren Enden mit einem Schraubengewinde mit gegenläufigem Gewinde ausgestattet ist.

4. Vorrichtung nach einem der vorhergehenden Ansprüche, wobei die Rahmenstruktur mit einem Tragarm zur drehbaren und linear nicht verlagerbaren Aufnahme der Betätigungsmittel ausgestattet ist.

5. Vorrichtung nach Anspruch 4, wobei der Arm mit einem Drehzapfen (17) ausgestattet ist, mit dem ein Arm (16) verbunden ist, der am anderen Ende mit der Rahmenstruktur schwenkbar verbunden (18) ist.

6. Vorrichtung nach einem der Ansprüche 2 und 3, die einen Antriebsmotor (22) für die Schraubenspindel umfasst.

7. Vorrichtung nach einem der vorhergehenden Ansprüche, wobei die Betätigungsmittel eine Spindelstruktur mit variabler Länge umfassen.

8. Vorrichtung nach Anspruch 7, die einen Stößel umfasst.

9. Vorrichtung nach einem der vorhergehenden Ansprüche, wobei die Rahmenstruktur Verbindungsmittel zum Verbinden mit dem Chassis eines Fahrzeugs umfasst.

10. Vorrichtung nach einem der vorhergehenden Ansprüche, wobei ein einziges Betätigungsmittel zwei gegenüber liegende Träger steuert.

11. Fahrzeug, ausgestattet mit einer Manövriervorrichtung, die zwei antreibbare Rollen zum Antreiben gegenüber liegender Räder eines Fahrzeugs umfasst, wobei jede Rolle auf einem Träger (6) bereitgestellt ist, der auf einer Rahmenstruktur (5) angeordnet ist, die mit dem Fahrzeugchassis (2) verbunden ist, wobei der Träger bezüglich des Chassis (2) des Fahrzeugs versetzbar ist und wobei zwischen dem Träger (6) und dem Chassis Betätigungsmittel zum Bewegen beider Träger (6) relativ zum Rahmens (5) bereitgestellt sind, um die Räder mit dem Fahrzeug in Eingriff und außer Eingriff zu bringen, wobei die Betätigungsmittel sich im Wesentlichen rechteckig zwischen den zwei Trägem erstrecken,
**dadurch gekennzeichnet,**
**dass** jeder Träger mit einem Arm (10, 30, 50, 70) versehen ist, der derart ausgeführt ist, dass der Träger beim Versetzen mittels der Betätigungsmittel in einer Richtung im wesentlichen in Richtung der Erstreckung der Betätigungsmittel zum und vom Rad weg bewegt wird.

## Revendications

1. Dispositif de manoeuvre pour des véhicules non motorisés, comprenant un rouleau pouvant être entraîné pour commander une roue de véhicule, un support (6), une structure de cadre (5) qui peut être raccordée au châssis du véhicule (2) et des moyens de fonctionnement, ledit rouleau étant monté sur ledit support et ayant un axe (24), ledit support étant disposé de façon déplaçable sur ladite structure de cadre (5), dans lequel lesdits moyens de fonctionnement sont prévus entre ledit support et ladite structure de cadre pour déplacer le support par rapport à ladite structure de cadre, afin de solidariser et de désolidariser ledit rouleau avec ladite roue dudit véhicule, lesdits moyens de fonctionnement étant allongés et s'étendant sensiblement parallèlement audit axe (24),
**caractérisé en ce que** ledit support est muni d'un bras (10,30,50,70) pour actionner ledit support agencé de telle sorte que lors du déplacement dudit bras par lesdits moyens de fonctionnement dans une direction sensiblement dans la direction d'extension desdits moyens de fonctionnement, le support est rapproché et éloigné de la roue.

2. Dispositif selon la revendication 1, dans lequel lesdits moyens de fonctionnement comprennent une tige filetée rotative et ledit bras est doté d'un écrou s'engageant dans celle-ci.

3. Dispositif selon la revendication 2, dans lequel ladite tige filetée est munie sur ses extrémités d'un filetage à main opposée.

4. Dispositif selon l'une des revendications précédentes, dans lequel ladite structure de cadre est munie d'une console pour recevoir lesdits moyens de fonctionnement de façon rotative et linéairement non déplaçable.

5. Dispositif selon la revendication 4, dans lequel ledit bras est muni d'un pivot (17) sur lequel est raccordé un bras (16), qui est connecté de façon pivotante (18) avec la structure de cadre sur l'autre extrémité.

6. Dispositif selon l'une des revendications 2 et 3, comprenant un moteur d'entraînement (22) pour ladite tige filetée.

7. Dispositif selon l'une des revendications précédentes, dans lequel les moyens de fonctionnement comprennent une structure de tige ayant une longueur variable.

8. Dispositif selon la revendication 7, comprenant un bélier.

9. Dispositif selon l'une des revendications précédentes, dans lequel ladite structure de cadre comprend des moyens de raccordement pour le raccordement sur le châssis d'un véhicule.

10. Dispositif selon l'une des revendications précédentes, dans lequel un seul moyen de fonctionnement commande deux supports opposés.

11. Véhicule équipé d'un dispositif de manoeuvre, comprenant deux rouleaux pouvant être entraînés pour commander les roues opposées d'un véhicule, dans lequel chaque rouleau est monté sur un support (6) disposé sur une structure de cadre (5), qui est raccordée au châssis du véhicule (2), ledit support étant déplaçable par rapport au châssis (2) dudit véhicule et dans lequel entre ledit support (6) et le châssis sont prévus des moyens de fonctionnement pour déplacer les deux supports (6) par rapport audit cadre (5) en vue de solidariser, désolidariser lesdits rouer avec ledit véhicule, lesdits moyens de fonctionnement s'étendant sensiblement de façon orthogonale entre lesdits deux supports,
**caractérisé en ce que** chaque support est équipé d'un bras (10,30,50,70) réalisé de telle sorte que lors du déplacement par lesdits moyens de fonctionnement dans une direction sensiblement dans la direction d'extension desdits moyens de fonctionnement, le support est rapproché et éloigné de la roue.
